(19) Europäisches Patentamt

European Patent Office

Office européen des brevets

(11) Publication number: **0 522 648 B1**

(12) **EUROPEAN PATENT SPECIFICATION**

(45) Date of publication of patent specification: **05.04.95**

(51) Int. Cl.⁶: **C09D 167/00**, C09D 133/12, C09D 133/14, C09D 5/03, C08G 63/199, C08G 63/20

(21) Application number: **92202048.2**

(22) Date of filing: **07.07.92**

(54) **Binder composition for powder coatings.**

(30) Priority: **10.07.91 NL 9101211**

(43) Date of publication of application:
**13.01.93 Bulletin 93/02**

(45) Publication of the grant of the patent:
**05.04.95 Bulletin 95/14**

(84) Designated Contracting States:
**AT BE CH DE DK ES FR GB IT LI NL SE**

(56) References cited:
**EP-A- 0 038 635**
**EP-A- 0 086 085**
**EP-A- 0 389 926**
**WO-A-92/01748**
**FR-A- 2 300 112**

**CHEMICAL ABSTRACTS, vol. 81, no. 26, 30 December 1974, Columbus, Ohio, US;abstract no. 171496t, 'Powder coating compositions with good storability.', page 118**

(73) Proprietor: **DSM N.V.**
**Het Overloon 1**
**NL-6411 TE Heerlen (NL)**

(72) Inventor: **Witte, Franciscus Maria**
**Meeuwenlaan 127**
**NL-8011 BZ Zwolle (NL)**
Inventor: **Hofkamp, Albertus Ronald**
**Weidesteenlaan 22**
**NL-8042 NA Zwolle (NL)**

**Description**

The present invention relates to a binder composition that contains a polyester resin and a polyacrylate resin and the use of this composition for the preparation of powder coatings.

The use of a polyester resin as a binder generally results in a powder coating with a number of desired coating properties, such as, for instance, flexibility, adhesion and gloss. Similar use of a polyacrylate resin also provides, desirable characteristics such as hardness, gloss, weather resistance and chemical resistance. A polyester used by itself may result in insufficient chemical resistance and hardness of the coating. Likewise an acrylate resin used by itself may results in a coating which is not flexible and that is too brittle. Thus in many cases the two resins need to be combined.

Binder compositions for use in powder coatings are disclosed in US-A-4499239, which describes a resin composition consisting substantially of 60-97 wt.% polyester with an acid number between 15 and 200 and 3-40 wt.% glycidyl acrylate polymer.

A disadvantage of the compositions from US-A-4499239 is that the described mixtures have a maximum polyacrylate resin content of only 40 wt.%, since at higher amounts by weight this resin is insufficiently miscible with the polyester resin also employed. As a result, the resins cannot be mixed in all the necessary ratios, for the desired applications.

An object of the present invention is to provide a binder composition employing a polyester resin and a polyacrylate resin in which the polyester resins and the polyacrylate resins can be mixed in any suitable ratio, depending on the specific application that is desired.

This object is achieved in that the polyester resin is composed substantially of units of dicarboxylic acids, glycols and three- or higher-functional polyols, the polyester resin comprises at least 15 mol% 1,4-cyclohexane dicarboxylic acid and at least 15 mol% isophthalic acid as dicarboxylic acids, and the glycols comprise at least 50 mol% branched aliphatic glycols with 5-11 carbon atoms, which may optionally comprise an ester group, and at most 50 mol% aliphatic glycol with 2-6 carbon atoms, while use is made of up to at most 8 mol% of dicarboxylic acids plus glycols of a three- or higher-functional polyol and the polyacrylate resin is a glycidylfunctional acrylate resin, a hydroxylfunctional resin or an acidic acrylate resin.

In this manner homogeneous mixtures of polyester resin and polyacrylate resin can be obtained in any desired mixing ratio. The compositions obtained result in powder coatings with the desired properties such as a good flexibility, good flow and good impact resistance, chemical resistance and weather resistance.

According to a preferred embodiment of the invention dicarboxylic acids comprise 40-60 mol% 1,4-cyclohexane dicarboxylic acid and 40-60 mol% isophthalic acid.

Examples of other polycarboxylic acids that may be used, include terephthalic acid, tetrahydro phthalic acid, hexahydro endomethylene tetrahydro phthalic acid, azelaic acid, sebacic acid, decane dicarboxylic acid, dimer fatty acid, adipic acid, succinic acid, maleic acid, 1,2,4-benzene-tricarboxylic acid, pyromellitic acid, trimesic acid, 3,6-dichloro phthalic acid and tetrachloro phthalic acid. Hydroxycarboxylic acids and/or, optionally, lactones such as, for example, 12-hydroxy stearic acid and/or ε-caprolactone can also be used. In minor amounts, up to 5 mol%, monocarboxylic acids such as benzoic acid, tertiary butyl-benzoic acid, hexahydrobenzoic acid and saturated aliphatic monocarboxylic acids may also be added during the preparation.

The amount of branched aliphatic glycol with 5-11 carbon atoms is preferably higher than 70 mol%. More preferably the amount is higher than 90 mol%, since this amount yields better weather resistant products.

Within the above-mentioned limits and in addition to the above-mentioned aliphatic glycols aliphatic diols can be used such as, for instance, ethylene glycol, 1,2-propanediol, 1,3-propanediol, 2,5-hexanediol, 1,6-hexanediol, 2,2-[bis(4-hydroxy-cyclohexyl)]-propane 1,4-dimethylolcyclohexane and 2,2,4-trimethyl-1,3-pentanediol and as well as smaller amounts of polyols such as glycerol, hexanetriol, pentaerythritol, sorbitol, trimethylol ethane, trimethylol propane and tris-(2-hydroxyl)-isocyanurate. Alternatively instead of diols polyols and/or epoxy compounds can be employed.

Polyesters can be prepared by standard methodology such as esterification or trans-esterification. Optionally polyester preparation can be in the presence of standard catalysts such as, for example, dibutyltin oxide or tetrabutyl titanate. Depending on the choice of synthesis and of the COOH/OH ratio final products can be obtained having certain the desired acid numbers and hydroxyl numbers.

The amount of three- or higher-functional polyol is preferably lower than 8 mol% relative to the other monomers, and more preferably lower than 4.5 mol%. The average molecular weight (Mn) of the polyester is usually between 1,000 and 7,000 and preferably is between 2,000 and 5,000.

Preferably the molecular weight is chosen so that in combination with the amount of branching component chosen the functionality of the polyester is between 2.0 and 3.5.

2

According to a preferred embodiment of the invention the polyester resin is a carboxyl functional resin with an acid number of between 20 and 100 mg KOH/g resin and a hydroxyl number lower than 10 mg KOH/g resin, and the polyacrylate resin is a glycidyl-functional acrylate resin.

The glycidyl-functional acrylate resin is usually based on glycidyl (meth)acrylate and methyl methacrylate. The resin may further be based on alkyl esters of (meth)acrylic acid such as methyl acrylate, ethyl (meth)acrylate, isopropyl (meth)acrylate, n-butyl (meth)acrylate, ethylhexyl (meth)acrylate, n-propyl (meth)acrylate, isobutyl (meth)acrylate, hydroxyethyl (meth)acrylate, hydroxypropyl (meth)acrylate and/or cyclohexyl (meth)acrylate and vinyl compounds such as styrene.

The glycidyl-functional acrylate resin is preferably based on:

a) 5-60 wt.% glycidyl methacrylate,
b) 10-30 wt.% n-butyl acrylate and
c) 20-70 wt.% methyl methacrylate

(where a + b + c are 100 wt.%).

Glycidyl acrylate resins can be prepared by a polymerization, where solvent is fed to a reactor, then heated until the solvent boils. Monomers, and subsequently monomers, initiator and, optionally, mercaptan are added during a period of, for instance, between 2 and 4 hours, after which the temperature is kept at the reflux temperature for, for instance, two hours. The solvent is distilled off by increasing the temperature followed by a vacuum distillation lasting, for instance, one to two hours. Then the product is drained and cooled.

According to a preferred embodiment of the present invention the binder composition is based on 20-90 wt.% of this polyester resin and 10-80 wt.% glycidyl-functional acrylate resin. Preferably, these amounts by weight are 30-80 wt.% polyester resin and 20-70 wt.% glycidyl acrylate resin.

Other suitable binder compositions are based on a hydroxyl-functional polyester resin and an hydroxyl-functional acrylate resin.

The polyester resin is based on the same units as described above. These hydroxyl-functional polyester resins have a hydroxyl number between 20 and 100 mg KOH/g resin and an acid number lower than 10 mg KOH/g resin.

The hydroxylacrylate resins preferably have a hydroxyl number between 40 and 150 mg KOH/ g resin and an acid number lower than 20 mg KOH/g resin.

The hydroxyl-functional acrylate resin can for example be based on hydroxyethyl (meth)acrylate, hydroxypropyl (meth)acrylate and methyl (meth)acrylate. The resin may also be based on methacrylic acid and alkyl esters of (meth)acrylic acid such as methyl acrylate, ethyl (meth)acrylate, isopropyl (meth)-acrylate, n-butyl (meth)acrylate, n-propyl (meth)acrylate, isobutyl (meth)acrylate, ethylhexyl acrylate and/or cyclohexyl (meth)acrylate and vinyl compounds such as styrene.

The hydroxyl-functional acrylate resins can be prepared in the same way as the glycidyl-functional acrylate resins described above.

The hydroxyl-functional acrylate resin is preferably based on:

a) 10-30 wt.% hydroxyethyl (meth)acrylate,
b) 10-30 wt.% n-butyl acrylate,
c) 10-30 wt.% n-butyl methacrylate and
d) 20-70 wt.% methyl methacrylate

(where a + b + c + d are 100 wt.%).

Preferably, the binder composition is based on 5-95 wt.% hydroxyl-functional polyester and 5-95 wt.% hydroxyl-functional acrylate resin.

Suitable crosslinking agents for these systems are, for instance, blocked di- or tri-isocyanates and crosslinking agents on the basis of melamine, such as for example hexamethoxy methyl melamine. These crosslinking agents are used in amounts between 2 and 50 wt.% relative to the binder composition.

According to a further preferred embodiment of the invention the binder composition is based on an acidic polyester resin with an acid number between 20 and 100 mg KOH/g resin and a hydroxyl number below 10 mg KOH/g resin, an acidic acrylate resin with an acid number between 20 and 150 mg KOH/g resin and a crosslinking agent.

The acidic acrylate resin may for example be based on (meth)acrylic acid and methyl methacrylate. The resin may further be based on alkyl esters of (meth)acrylic acid such as methyl acrylate, ethyl (methyl)acrylate, isopropyl (meth)acrylate, n-butyl (meth)acrylate, n-propyl (meth)acrylate, isobutyl (meth)-acrylate, ethylhexyl acrylate, cyclohexyl (meth)acrylate and hydroxyethyl (meth)acrylate, hydroxypropyl (meth)acrylate and vinyl compounds such as styrene.

Acidic acrylate resins can be prepared in the same way as the glycidyl acrylate resins and hydroxyl acrylate resins already described.

A suitable acidic acrylate resin is based on, for instance:
a) 3-20 wt.% methacrylic acid,
b) 10-30 wt.% n-butyl acrylate,
c) 10-30 wt.% n-butyl methacrylate and
d) 20-70 wt.% methyl methacrylate
(where a + b + c + d are 100 wt.%).

The composition is preferably based on 5-95 wt.% polyester resin and 5-95 wt.% acrylate resin, the amount of crosslinking agent being between 2 and 25 wt.% (relative to the binder composition).

Examples of suitable crosslinking agents are for example trisglycidyl isocyanurate and $\beta$-hydroxy alkyl amides.

The polyester resin and the acrylate resin are homogeneously mixed, preferably in the melt, by means of an extruder. In general, additives such as flow-promoting agents, catalysts, pigments, compatibilizers and/or fillers can be added during mixing of the polyester resin and the acrylate resin. The extrudate is then ground and screened, and the fraction with a particle size smaller than 90 micrometer is applied to a substrate by means of an electrostatic spraying device. Suitable substrates are, for example, metal, plastic and glass. The extrudate fraction and substrate are then cured for 10 to 30 minutes in a muffle furnace at a temperature between 130°C and 240°C. The resulting paint layer of the wholly or partly coated substrate exhibits an excellent combination of chemical resistance, such as aceton- and petrolresistance, gloss, flow, weather resistance and mechanical properties such as impact resistance or flexibility.

The binder compositions are highly suitable, for example, in powder coatings used in the automotive industry. In this application they may serve as a basis for a clear top coat.

GB-A-1518004 discloses a composition comprising a polyester being derived from an aromatic dicarboxylic acid of which at least 80 mol % is terephtalic acid, isophtalic acid or 1,4-cyclohexane-dicarboxylic acid and a diol component and from 0.5 to 2.5 parts by weight of an addition polymer which can be an acrylate copolymer. However, these acrylate copolymers are non-functional polymers and they are used as flow agents. In contrast, the present invention relates to functional acrylate polymers, consequently these acrylates are totally different products.

The invention will be elucidated on the basis of the following examples, without however being limited thereto.

Examples A-D

Preparation of polyester resin

A 3 l reactor vessel, equipped with a thermometer, a stirrer and a distillation setup, was charged with the monomers as shown (in moles) in Table I. While the reaction mixture was being stirred and a light nitrogen flow was passed over it, the temperature was increased to 170°C, giving rise to water formation. The temperature was gradually increased further to a maximum of 240°C and the water was distilled off. The reaction was continued until the acid number of the polyester was lower than 10 mg KOH/g.

Subsequently, the monomer for the 2nd step was added and further esterified until the acid number was as shown in Table II. The last part of the process was carried out under reduced pressure. Besides the acid number (ISO 3682), Table II also presents the viscosity ($\eta$), measured according to Emila rheometer (dPa.s, 165°C), and the glass transition temperature (Tg, Mettler TA-3000, system 5°C/min).

4

Table I: Monomers (in moles)

| 1st step | A | B | C | D |
|---|---|---|---|---|
| TMP[1]) | 0.50 | 0.40 | 0.10 | 0.35 |
| IPA[2]) | 5.46 | 3.32 | 2.94 | 3.34 |
| NPG[3]) | 8.96 | 4.66 | 4.54 | 4.74 |
| CHDA[4]) | 5.50 | 0.74 | 0.70 | 0.75 |

| 2nd step | | | | |
|---|---|---|---|---|
| CHDA | - | 2.40 | 2.10 | 2.35 |

Amounts in monomer moles per mole of resin

1) trimethylol propane

2) isophthalic acid

3) neopentyl glycol

4) 1,4-cyclohexane dicarboxylic acid

Table II

| | A | B | C | D |
|---|---|---|---|---|
| Mn[1] | 2500 | 1440 | 1260 | 1410 |
| F[2] | 2.50 | 2.40 | 2.10 | 2.35 |
| AN[3] | 55.9 | 91.2 | 91.9 | 91.9 |
| Visc.[4] | 63 | 41 | 23 | 35 |
| Tg (°C)[5] | 39 | 44 | 39 | 41 |

[1] Mn = molecular weight

[2] F = functionality

[3] AN = acid number = mg KOH per g resin

[4] viscosity: measured at 165°C, Emila.

[5] Tg = glass transition temperature

Experiments E-H

Preparation of glycidyl acrylate resin

A 6 l reactor vessel, equipped with a thermometer, a stirrer and a reflux cooler, was charged with 1500 g toluene. While the reaction contents were being stirred and a nitrogen flow was passed through the reactor, the temperature was increased to the reflux temperature. In the mixture of the monomers (in the ratio indicated in Table III) of in total 3000 g, 90 g 2,2-azo-bis-isobutyronitrile was dissolved. The resulting monomer mixture was then fed to the reactor in 3 hours. In the reactor the reflux temperature was

5

maintained. Two hours after addition of the monomer mixture a separator vessel was included in the setup, and the solvent was removed by a gradual increase in the temperature and application of a vacuum.

Table III presents the ratio between the monomers in weight percentages as well as the theoretical epoxy equivalent weight (EEW), the viscosity ($\eta$), measured according to Emila rheometer (dPa.s, 165°C), and the glass transition temperature (Tg, Mettler TA-3000, system 5°C/min).

Table III

|  | E | F | G | H |
|---|---|---|---|---|
| MMA[1]) | 30 | 33 | 56.3 | 65.8 |
| GMA[2]) | 60 | 57 | 23.7 | 14.2 |
| BA[3]) | 10 | 10 | 20 | 20 |
| EEW. | 240 | 260 | 600 | 1000 |
| Visc. | 400 | 635 | 330 | 295 |
| Tg (°C) | 45 | 55 | 52 | 51 |

1) MMA = methyl methacrylate
2) GMA = glycidyl methacrylate
3) BA = butyl acrylate

## Example I

Preparation of powder coating on the basis of the binder composition according to the invention

At 95°C, 80 parts by weight of polyester resin according to Experiment A, 20 parts by weight of acrylate resin according to Experiment E and 0.5 parts by weight of flow-promoting agent ("Modaflow Powder"™, ex Monsanto) were mixed in an extruder.

## Example II

Example I was repeated, but 70 parts by weight of polyester was used according to Experiment B and as acrylate resin 30 parts by weight of acrylate resin was used according to Experiment F.

## Example III

Example I was repeated, but 50 parts by weight of polyester was used according to Experiment C and as polyacrylate resin 50 parts by weight of acrylate resin was used according to Experiment G.

## Example IV

Example I was repeated, but 40 parts by weight of polyester was used according to Experiment D and as polyacrylate resin 60 parts by weight of acrylate resin was used according to Experiment H.

The powder coatings according to Examples I-IV were tested, yielding the following results.

TABLE IV

| Powder coating according to | I | II | III | IV |
|---|---|---|---|---|
| flow[1]) | moderate | fair | good | very good |
| clarity[2]) | good | fair | good | good |
| ESP[3]) | >8 mm 170°C | >8 mm 150-240°C | >8 mm 180-200°C | >8 mm 180°C |
| impact resistance[4]) | 60 IP[5]), | 60 IP, | <20 IP, | <20 IP, |
| in curing cycle | 20'160°C | 20'160°C | 10'200°C | 10'200°C |
| layer thickness | 50 μ | 50 μ | 50 μ | 50 μ |
| petrol resistance[6]) | fairly good | good | good | fairly good |

1), 2) and 6) were determined visually.

3) Erichsen slow penetration; flexibility test according to ISO-1520/DIN 53156.

4) Impact resistance (reverse impact) determined according to ASTM D-2794/69.

5) IP = inch pound

6) a cotton ball soaked in petrol is placed on the coating under a cap for two hours, after which the eventual damage is judged visually.

Thus it is evident that polyester resins and the polyacrylate resins could be mixed in different amounts by weight, resulting in powder coatings with a good combination of desired properties.

Especially the excellent flexibility of the acrylate containing system is surprising.

**Claims**

**Claims for the following Contracting States : AT, BE, CH, DE, DK, FR, GB, IT, LI, NL, SE**

1. Binder composition, that contains a polyester resin and a polyacrylate resin, for powder coatings, characterized in that the polyester resin is composed substantially of units of dicarboxylic acids, glycols and three- or higher-functional polyols, the polyester resin comprises at least 15 mol% isophthalic acid and at least 15 mol% 1,4-cyclohexane dicarboxylic acid as dicarboxylic acids, and the glycols comprise at least 50 mol% branched aliphatic glycols with 5-11 carbon atoms, which may optionally comprise an ester group, and at most 50 mol% aliphatic glycol with 2-6 carbon atoms, while use is made of up to at most 8 mol% of dicarboxylic acids plus glycols of a three- or higher-functional polyol and the polyacrylate resin is a glycidylfunctional acrylate resin, a hydroxylfunctional resin or an acidic acrylate resin.

2. Binder composition according to claim 1, characterized in that the dicarboxylic acid comprise 40-60 mol% 1,4-cyclohexane dicarboxylic acid and 40-60 mol% isophthalic acid.

3. Binder composition according to any one of claims 1-2, characterized in that the polyester resin has an acid number between 20 and 100 mg KOH/g resin and a hydroxyl number lower than 10 mg KOH/g resin and the polyacrylate resin is a glycidyl-functional acrylate resin.

4. Binder composition according to claim 3, characterized in that the glycidyl-functional acrylate resin is based on:
   5-60 wt.% glycidyl methacrylate,
   10-30 wt.% n-butyl acrylate and
   20-70 wt.% methyl methacrylate.

5. Binder composition according to any one of claims 3-4, characterized in that the binder composition contains 20-90 wt.% polyester and 10-80 wt.% glycidyl-functional acrylate resin.

6. Binder composition according to any one of claims 1-2, characterized in that the polyester resin is a hydroxyl-functional polyester resin with a hydroxyl number between 20 and 100 mg KOH/g resin and an acid number lower than 10 mg KOH/g resin and the polyacrylate resin is a hydroxyl-functional acrylate resin with a hydroxyl number between 40 and 150 mg KOH/g resin.

7. Binder composition according to claim 6, characterized in that the hydroxyl-functional acrylate resin is based on:
10-30 wt.% hydroxyethyl (meth)acrylate,
10-30 wt.% n-butyl acrylate,
10-30 wt.% n-butyl methacrylate and
20-70 wt.% methyl methacrylate.

8. Binder composition according to any one of claims 1-2, characterized in that the binder composition contains an acidic polyester resin with an acid number between 20 and 100 mg KOH/g resin and a hydroxyl number lower than 10 mg KOH/g of resin, an acidic acrylate resin with an acid number between 20 and 150 mg KOH/g of resin, and a cross-linking agent.

9. Binder composition according to claim 8, characterized in that the acrylate resin is based on
3-20 wt.% methacrylic acid,
10-30 wt.% n-butyl acrylate,
10-30 wt.% n-butyl methacrylate and
20-70 wt.% methyl methacrylate.

10. Use of a binder composition according to any one of claims 1-9 for the preparation of powder coatings.

11. Powder coating based on a binder composition according to any one of claims 1-9.

12. Use of a powder coating according to claim 11 in automotive applications.

13. Wholly or partly coated substrate, characterized in that as coating material use is made of a powder coating according to claim 11.

**Claims for the following Contracting State : ES**

1. A method for the preparation of a binder composition for powder coatings by homogeneously mixing a polyester resin and a polyacrylate resin, characterized in that the polyester resin is composed substantially of units of dicarboxylic acids, glycols and three- or higher-functional polyols, the polyester resin comprises at least 15 mol% isophthalic acid and at least 15 mol% 1,4-cyclohexane dicarboxylic acid as dicarboxylic acids, and the glycols comprise at least 50 mol% branched aliphatic glycols with 5-11 carbon atoms, which may optionally comprise an ester group, and at most 50 mol% aliphatic glycol with 2-6 carbon atoms, while use is made of up to at most 8 mol% of dicarboxylic acids plus glycols of a three- or higher-functional polyol and the polyacrylate resin is a glycidylfunctional acrylate resin, a hydroxylfunctional resin or an acidic acrylate resin.

2. A method according to claim 1, characterized in that dicarboxylic acid comprise 40-60 mol% 1,4-cyclohexane dicarboxylic acid and 40-60 mol% isophthalic acid.

3. A method according to any one of claims 1-2, characterized in that the polyester resin has an acid number between 20 and 100 mg KOH/g resin and a hydroxyl number lower than 10 mg KOH/g resin and the polyacrylate resin is a glycidyl-functional acrylate resin.

4. A method according to claim 3, characterized in that the glycidyl-functional acrylate resin is based on:
5-60 wt.% glycidyl methacrylate,
10-30 wt.% n-butyl acrylate and
20-70 wt.% methyl methacrylate.

5. A method according to any one of claims 3-4, characterized in that the binder composition contains 20-90 wt.% polyester and 10-80 wt.% glycidyl-functional acrylate resin.

6. A method according to any one of claims 1-2, characterized in that the polyester resin is a hydroxyl-functional polyester resin with a hydroxyl number between 20 and 100 mg KOH/g resin and an acid number lower than 10 mg KOH/g resin and the polyacrylate resin is a hydroxyl-functional acrylate resin with a hydroxyl number between 40 and 150 mg KOH/g resin.

7. A mehtod according to claim 6, characterized in that the hydroxyl-functional acrylate resin is based on:
10-30 wt.% hydroxyethyl (meth)acrylate,
10-30 wt.% n-butyl acrylate,
10-30 wt.% n-butyl methacrylate and
20-70 wt.% methyl methacrylate.

8. A method according to any one of claims 1-2, characterized in that the binder composition contains an acidic polyester resin with an acid number between 20 and 100 mg KOH/g resin and a hydroxyl number lower than 10 mg KOH/g of resin, an acidic acrylate resin with an acid number between 20 and 150 mg KOH/g of resin, and a crosslinking agent.

9. A method according to claim 8, characterized in that the acrylate resin is based on
3-20 wt.% methacrylic acid,
10-30 wt.% n-butyl acrylate,
10-30 wt.% n-butyl methacrylate and
20-70 wt.% methyl methacrylate.

10. Use of a binder composition obtainable according to any one of claims 1-9 for the preparation of powder coatings.

11. Powder coating based on a binder composition obtainable according to any one of claims 1-9.

12. Use of a powder coating according to claim 11 in automotive applications.

13. Wholly or partly coated substrate, characterized in that as coating material use is made of a powder coating obtainable according to claim 11.

**Patentansprüche**
**Patentansprüche für folgende Vertragsstaaten : AT, BE, CH, DE, DK, FR, GB, IT, LI, NL, SE**

1. Bindemittel-Zusammensetzung, welche ein Polyesterharz und ein Polyacrylatharz enthält, für Pulverbeschichtungen, dadurch gekennzeichnet, daß das Polyesterharz im wesentlichen aus Einheiten von Dicarbonsäuren, Glykolen und drei- oder höherfunktionellen Polyolen besteht, das Polyesterharz zumindest 15 Mol-% Isophthalsäure und zumindest 15 Mol-% 1,4-Cyclohexandicarbonsäure als Dicarbonsäuren umfaßt, und die Glykole zumindest 50 Mol-% verzweigte aliphatische Glykole mit 5 bis 11 Kohlenstoffatomen, die gegebenenfalls eine Estergruppe enthalten können, und höchstens 50 Mol-% aliphatisches Glykol mit 2 bis 6 Kohlenstoffatomen umfassen, wobei bis zu höchstens 8 Mol-% Dicarbonsäuren plus Glykole eines drei- oder höherfunktionellen Polyols verwendet werden, und das Polyacrylatharz ein Glycidyl-funktionelles Acrylatharz, ein Hydroxyl-funktionelles Harz oder ein Säureacrylatharz ist.

2. Bindemittel-Zusammensetzung nach Anspruch 1, dadurch gekennzeichnet, daß die Dicarbonsäuren 40 bis 60 Mol-% 1,4-Cyclohexandicarbonsäure und 40 bis 60 Mol-% Isophthalsäure umfassen.

3. Bindemittel-Zusammensetzung nach Anspruch 1 oder 2, dadurch gekennzeichnet, daß das Polyesterharz eine Säurezahl zwischen 20 und 100 mg KOH/g Harz und eine Hydroxylzahl von weniger als 10 mg KOH/g Harz aufweist, und das Polyacrylatharz ein Glycidyl-funktionelles Acrylatharz ist.

4. Bindemittel-Zusammensetzung nach Anspruch 3, dadurch gekennzeichnet, daß das Glycidyl-funktionelle Acrylatharz basiert auf:
5 bis 60 Masse-% Glycidylmethacrylat,
10 bis 30 Masse-% n-Butylacrylat und
20 bis 70 Masse-% Methylmethacrylat.

5. Bindemittel-Zusammensetzung nach Anspruch 3 oder 4, dadurch gekennzeichnet, daß die Bindemittel-Zusammensetzung 20 bis 90 Masse-% Polyester und 10 bis 80 Masse-% Glycidyl-funktionelles Acrylatharz enthält.

6. Bindemittel-Zusammensetzung nach Anspruch 1 oder 2, dadurch gekennzeichnet, daß das Polyesterharz ein Hydroxyl-funktionelles Polyesterharz mit einer Hydroxylzahl zwischen 20 und 100 mg KOH/g Harz und einer Säurezahl von weniger als 10 mg KOH/g Harz ist, und das Polyacrylatharz ein Hydroxyl-funktionelles Acrylatharz mit einer Hydroxylzahl zwischen 40 und 150 mg KOH/g Harz ist.

7. Bindemittel-Zusammensetzung nach Anspruch 6, dadurch gekennzeichnet, daß das Hydroxyl-funktionelle Acrylatharz basiert auf:

    10 bis 30 Masse-% Hydroxyethyl(meth)acrylat,

    10 bis 30 Masse-% n-Butylacrylat,

    10 bis 30 Masse-% n-Butylmethacrylat und

    20 bis 70 Masse-% Methylmethacrylat.

8. Bindemittel-Zusammensetzung nach Anspruch 1 oder 2, dadurch gekennzeichnet, daß die Bindemittel-Zusammensetzung ein Säurepolyesterharz mit einer Säurezahl zwischen 20 und 100 mg KOH/g Harz und einer Hydroxylzahl von weniger als 10 mg KOH/g Harz, ein Säureacrylatharz mit einer Säurezahl zwischen 20 und 150 mg KOH/g Harz und ein Vernetzungsmittel enthält.

9. Bindemittel-Zusammensetzung nach Anspruch 8, dadurch gekennzeichnet, daß das Acrylatharz basiert auf:

    3 bis 20 Masse-% Methacrylsäure,

    10 bis 30 Masse-% n-Butylacrylat,

    10 bis 30 Masse-% n-Butylmethacrylat und

    20 bis 70 Masse-% Methylmethacrylat.

10. Verwendung einer Bindemittel-Zusammensetzung nach einem der Ansprüche 1 bis 9 zur Herstellung von Pulverbeschichtungen.

11. Pulverbeschichtung auf der Basis einer Bindemittel-Zusammensetzung nach einem der Ansprüche 1 bis 9.

12. Verwendung einer Pulverbeschichtung nach Anspruch 11 bei Automobilanwendungen.

13. Gänzlich oder teilweise beschichtetes Substrat, dadurch gekennzeichnet, daß als Beschichtungsmaterial eine Pulverbeschichtung nach Anspruch 11 verwendet wird.

**Patentansprüche für folgenden Vertragsstaat : ES**

1. Verfahren zur Herstellung einer Bindemittel-Zusammensetzung für Pulverbeschichtungen durch das homogene Mischen eines Polyesterharzes und eines Polyacrylatharzes, dadurch gekennzeichnet, daß das Polyesterharz im wesentlichen aus Einheiten von Dicarbonsäuren, Glykolen und drei- oder höherfunktionellen Polyolen besteht, das Polyesterharz zumindest 15 Mol-% Isophthalsäure und zumindest 15 Mol-% 1,4-Cyclohexandicarbonsäure als Dicarbonsäuren umfaßt, und die Glykole zumindest 50 Mol-% verzweigte aliphatische Glykole mit 5 bis 11 Kohlenstoffatomen, die gegebenenfalls eine Estergruppe enthalten können, und höchstens 50 Mol-% aliphatisches Glykol mit 2 bis 6 Kohlenstoffatomen umfassen, wobei bis zu höchstens 8 Mol-% Dicarbonsäuren plus Glykole eines drei- oder höherfunktionellen Polyols verwendet werden, und das Polyacrylatharz ein Glycidyl-funktionelles Acrylatharz, ein Hydroxyl-funktionelles Harz oder ein Säureacrylatharz ist.

2. Verfahren nach Anspruch 1, dadurch gekennzeichnet, daß die Dicarbonsäuren 40 bis 60 Mol-% 1,4-Cyclohexandicarbonsäure und 40 bis 60 Mol-% Isophthalsäure umfassen.

3. Verfahren nach Anspruch 1 oder 2, dadurch gekennzeichnet, daß das Polyesterharz eine Säurezahl zwischen 20 und 100 mg KOH/g Harz und eine Hydroxylzahl von weniger als 10 mg KOH/g Harz aufweist, und das Polyacrylatharz ein Glycidyl-funktionelles Acrylatharz ist.

4. Verfahren nach Anspruch 3, dadurch gekennzeichnet, daß das Glycidyl-funktionelle Acrylatharz basiert auf:

    5 bis 60 Masse-% Glycidylmethacrylat,

EP 0 522 648 B1

10 bis 30 Masse-% n-Butylacrylat und
20 bis 70 Masse-% Methylmethacrylat.

5. Verfahren nach Anspruch 3 oder 4, dadurch gekennzeichnet, daß die Bindemittel-Zusammensetzung 20 bis 90 Masse-% Polyester und 10 bis 80 Masse-% Glycidyl-funktionelles Acrylatharz enthält.

6. Verfahren nach Anspruch 1 oder 2, dadurch gekennzeichnet, daß das Polyesterharz ein Hydroxyl-funktionelles Polyesterharz mit einer Hydroxylzahl zwischen 20 und 100 mg KOH/g Harz und einer Säurezahl von weniger als 10 mg KOH/g Harz ist, und das Polyacrylatharz ein Hydroxyl-funktionelles Acrylatharz mit einer Hydroxylzahl zwischen 40 und 150 mg KOH/g Harz ist.

7. Verfahren nach Anspruch 6, dadurch gekennzeichnet, daß das Hydroxyl-funktionelle Acrylatharz basiert auf:
10 bis 30 Masse-% Hydroxyethyl(meth)acrylat,
10 bis 30 Masse-% n-Butylacrylat,
10 bis 30 Masse-% n-Butylmethacrylat und
20 bis 70 Masse-% Methylmethacrylat.

8. Verfahren nach Anspruch 1 oder 2, dadurch gekennzeichnet, daß die Bindemittel-Zusammensetzung ein Säurepolyesterharz mit einer Säurezahl zwischen 20 und 100 mg KOH/g Harz und einer Hydroxylzahl von weniger als 10 mg KOH/g Harz, ein Säureacrylatharz mit einer Säurezahl zwischen 20 und 150 mg KOH/g Harz und ein Vernetzungsmittel enthält.

9. Verfahren nach Anspruch 8, dadurch gekennzeichnet, daß das Acrylatharz basiert auf:
3 bis 20 Masse-% Methacrylsäure,
10 bis 30 Masse-% n-Butylacrylat,
10 bis 30 Masse-% n-Butylmethacrylat und
20 bis 70 Masse-% Methylmethacrylat.

10. Verwendung einer Bindemittel-Zusammensetzung nach einem der Ansprüche 1 bis 9 zur Herstellung von Pulverbeschichtungen.

11. Pulverbeschichtung auf der Basis einer Bindemittel-Zusammensetzung, die nach einem der Ansprüche 1 bis 9 erhalten werden kann.

12. Verwendung einer Pulverbeschichtung nach Anspruch 11 bei Automobilanwendungen.

13. Gänzlich oder teilweise beschichtetes Substrat, dadurch gekennzeichnet, daß als Beschichtungsmaterial eine Pulverbeschichtung, die nach Anspruch 11 erhalten werden kann, verwendet wird.

**Revendications**
**Revendications pour les Etats contractants suivants : AT, BE, CH, DE, DK, FR, GB, IT, LI, NL, SE**

1. Composition de liant, qui contient une résine polyester et une résine polyacrylate pour des revêtement en poudre, caractérisée en ce que :
la résine polyester est composée substantiellement de motifs d'acides dicarboxyliques, de glycols et de polyols tri- ou polyfonctionnels, la résine polyester comprend au moins 15 moles % d'acide isophtalique et au moins 15 moles % d'acide 1,4-cyelohexane dicarboxylique à titre d'acides di-carboxyliques ; et les glycols comprennent au moins 50 moles % de glycols aliphatiques ramifiés de 5 à 11 atomes de carbone, pouvant facultativement contenir un groupe ester, et au maximum 50 moles % de glycol aliphatique de 2 à 6 atomes de carbone, alors qu'on utilise jusqu'à un maximum de 8 moles % d'acides dicarboxyliques plus des glycols d'un polyol tri- ou poly-fonctionnel, et la résine polyacrylate est une résine acrylate à fonction glycidyl, une résine hydroxyfonctionnelle ou une résine acrylate acide.

2. Composition de liant selon la revendication 1, caractérisé en ce que l'acide dicarboxylique comprend de 40 à 60 moles % d'acide 1,4-cyclohexane dicarboxylique et de 40 à 60 moles % d'acide isophtalique.

11

EP 0 522 648 B1

3. Composition de liant selon la revendication 1 ou 2, caractérisée en ce que la résine polyester présente un indice d'acide compris entre 20 et 100 mg KOH/g de résine et un indice d'hydroxyle inférieur à 10 mg KOH/ g de résine et la résine polyacrylate est une résine acrylate à fonction glycidyle.

4. Composition de liant selon la revendication 3, caractérisée en ce que la résine acrylate à fonction glycidyle est basée sur :
5 à 60 % en poids de méthacrylate de glycidyle,
10 à 30 % en poids d'acrylate de n-butyle, et
20 à 70 % en poids de méthacrylate de méthyle.

5. Composition de liant selon l'une des revendications 3 ou 4, caractérisée en ce qu'elle contient de 20 a 90 % en poids de résine polyester et de 10 a 80 % en poids de résine acrylate fonctionnelle de glycidyle.

6. Composition de liant selon la revendication 1 ou 2, caractérisée en ce que la résine polyester est une résine polyester à fonction hydroxyle ayant un-indice d'hydroxyle de 20 à 100 mg KOH/g résine et un indice d'acide inférieur à 10 mg KOH/g résine et la résine polyacrylate est une résine acrylate à fonction hydroxyle ayant un indice d'hydroxyle de 40 à 150 mg KOH/g résine.

7. Composition liante selon la revendication 6, caractérisée en ce que la résine acrylate à fonction hydroxyle est basée sur :
10 à 30 % en poids de (méth)acrylate d'hydroxyéthyle
10 à 30 % en poids d'acrylate de n-butyle,
10 à 30 % en poids de méthacrylate de n-butyle, et
20 à 70 % en poids de méthacrylate de méthyle.

8. Composition de liant selon la revendication 1 ou 2, caractérisée en ce que :
la composition de liant contient une résine polyester acide ayant un indice d'acide de 20 à 100 mg KOH/g résine et un indice d'hydroxyle inférieur à 10 mg KOH/ g résine, une résine acrylate acide ayant un indice d'acide de 20 à 150 mg KOH/ g résine et un agent réticulant.

9. Composition de liant selon la revendication 8, caractérisée en ce que la résine acrylate est basée sur:
3 à 20% en poids d'acide méthacrylique,
10 à 30% en poids d'acrylate de n-butyle,
10 à 30% en poids de méthacrylate de n-butyle, et
20 à 70% en poids de méthacrylate de méthyle.

10. Utilisation d'une composition de liant selon l'une quelconque des revendications 1 à 9, pour préparer des revêtements en poudre.

11. Revêtement en poudre à base d'une composition de liant selon l'une quelconque des revendications 1 à 9.

12. Utilisation d'un revêtement en poudre selon la revendication 11, pour des applications aux automobiles.

13. Substrat revêtu en totalité ou en partie, caractérisé en ce qu'à titre de matière de revêtement, on utilise un revêtement en poudre selon la revendication 11.

**Revendications pour l'Etat contractant suivant : ES**

1. Procédé de préparation d'une composition de liant pour revêtements en poudre consistant à mélanger de façon homogène une résine polyester et une résine polyacrylate, caractérise en ce que la résine polyester est composée substantiellement de motifs d'acides dicarboxyliques, de glycols et de polyols tri- ou polyfonctionnels, la résine polyester comprend au moins 15 moles % d'acide isophtalique et au moins 15 modes % d'acide 1,4-cyclohexane dicarboxylique à titre d'acides dicarboxyliques ; et les glycols comprennent au moins 50 moles % de glycols aliphatiques ramifiés de 5 à 11 atomes de carbone, pouvant facultativement contenir un groupe ester, et au maximum 50 moles % de glycol aliphatique de 2 à 6 atomes de carbone, alors qu'on utilise jusqu'à un maximum de 8 moles %

12

d'acides dicarboxyliques plus des glycols d'un polyol tri- ou poly- fonctionnel ; et la résine polyacrylate est une résine acrylate à fonction glycidyle, une résine hydroxyfonctionnelle ou une résine acrylate acide.

2. Procédé selon la revendication 1, caractérisé en ce que l'acide dicarboxylique comprend de 40 à 60 moles % d'acide 1,4-cyclohexane-dicarboxylique et de 40 à 60 moles d'acide isophtalique.

3. Procédé selon la revendication 1 ou 2, caractérisé en ce que la résine polyester présente un indice d'acide de 20 à 100 mg KOH/g résine et un indice d'hydroxyle inférïeur à 10 mg KOH/g résine et la résine polyacrylate est une résine d'acrylate à fonction glycidyle.

4. Procédé selon la revendication 3, caractérisé en ce que la résine acrylate à fonction glycidyle est à base de :
   5 à 60% en poids de méthacrylate de glycidyle,
   10 à 30% en poids d'acrylate de n-butyle,
   et
   20 à 70% en poids de méthacrylate de méthyle.

5. Procédé selon la revendication 3 ou 4, caractérise en ce que la composition de liant contient de 20 à 90% en poids de résine polyester et de 10 à 80% en poids de résine acrylate à fonction glycidyle.

6. Procédé selon la revendication 1 ou 2, caractérisé en ce que :
   la résine polyester est une résine polyester à fonction hydroxyle ayant un indice d'hydroxyle de 20 à 100 mg KOH/g résine et un indice d'acide inférieur à 10 mg KOH/g résine et la résine polyacrylate est une résine acrylate à fonction hydroxyle ayant un indice d'hydroxyle de 40 à 150 mg KOH/ g résine.

7. Procédé selon la revendication 6, caractérisé en ce que la résine acrylate à fonction hydroxyle est basée sur :
   10 à 30% en poids de (meth)acrylate d'hydroxyéthyle
   10 à 30% en poids d'acrylate de n-butyle,
   10 à 30% en poids de méthacrylate de n-butyle, et
   20 à 70% en poids de méthacrylate de méthyle.

8. Procédé selon la revendication 1 ou 2, caractérisé en ce que :
   la composition de liant contient une résine polyester acide ayant un indice d'acide de 20 à 100 mg KOH/g résine et un indice d'hydroxyle inférieur à 10 mg KOH/ g résine, une résine acrylate acide ayant un indice d'acide de 20 à 150 mg KOH/ g résine et un agent réticulant.

9. Procédé selon la revendication 8, caractérisé en ce que la résine acrylate est basée sur :
   3 à 20% en poids d'acide méthacrylique,
   10 à 30% en poids d'acrylate de n-butyle,
   10 à 30% en poids de méthacrylate de n-butyle, et
   20 à 70% en poids de méthacrylate de méthyle.

10. Utilisation d'une composition de liant selon l'une quelconque des revendications 1 à 9, pour préparer des revêtements en poudre.

11. Revêtement en poudre à base d'une composition de liant selon l'une quelconque des revendications 1 à 9.

12. Utilisation d'un revêtement en poudre selon la revendication 11, pour des applications aux automobiles.

13. Substrat revêtu en totalité ou en partie, caractérisé en ce qu'à titre de matière de revêtement, on utilise un revêtement en poudre selon la revendication 11.